# EUROPÄISCHE PATENTSCHRIFT

(11) **EP 2 998 601 B1**
(45) Veröffentlichungstag und Bekanntmachung des Hinweises auf die Patenterteilung: **16.08.2017**
(21) Anmeldenummer: 15181762.4
(22) Anmeldetag: 20.08.2015
(51) Int. Cl.: F16D 13/64, F16D 13/52, F16D 55/36, F16D 65/12, F16D 69/00

(54) **REIBBAUGRUPPE**
FRICTION GROUP
COMPOSANT DE FRICTION

(30) Priorität: 22.08.2014 AT 505812014
(43) Veröffentlichungstag der Anmeldung: 23.03.2016
(73) Patentinhaber: Miba Frictec GmbH, 4663 Laakirchen (AT)
(72) Erfinder: NICKEL, Falk, 4810 Gmunden (AT); PROMBERGER, Andreas, 4802 Ebensee (AT)
(74) Vertreter: Burger, Hannes

(56) Entgegenhaltungen:
- EP-A2- 0 267 027
- EP-A2- 2 843 253
- DE-A1- 3 801 911
- FR-A1- 2 774 731
- US-A- 2 927 673
- US-A1- 2006 102 443
- US-A1- 2013 288 003

## Beschreibung

Die Erfindung betrifft eine Reibbaugruppe umfassend einen ersten Bauteil und einen zweiten Bauteil sowie mehrere Innenlamellen und mehrere Außenlamellen, wobei die Innenlamellen an dem ersten Bauteil und die Außenlamellen an dem zweiten Bauteil angeordnet sind und die Innenlamellen und die Außenlamellen in einer axialen Richtung abwechselnd angeordnet sind, und wobei zwischen den Innenlamellen und den Außenlamellen jeweils zumindest ein frei drehbarer Reibring angeordnet ist, der einen Durchbruch mit einem Innendurchmesser aufweist, und wobei die Innenlamellen und/oder die Außenlamellen relativ zueinander zur Ausbildung eines Reibschlusses mit den Reibringen in der axialen Richtung verstellbar sind. Lamellenkupplungen und Lamellenbremsen sind im Stand der Technik bereits umfassend beschrieben. Die heute überwiegend eingesetzten Systeme weisen Innenlamellen und Außenlamellen auf, die in axialer Richtung alternierend angeordnet sind. Die Innenlamellen sind dabei auf einer innen liegenden Welle angeordnet und mit dieser drehfest verbunden. Die Außenlamellen sind beispielsweise an einer inneren Oberfläche eines Gehäuses der Kupplung angeordnet und mit diesem drehfest verbunden. Zur Herstellung eines Reibschlusses im Lamellenpaket sind die Außenlamellen relativ zu den Innenlamellen - oder umgekehrt - in axialer Richtung verstellbar. Der Reibschluss, der z.B. für die Drehmomentübertragung in der Ausbildung als Lamellenkupplung erforderlich ist, wird dabei über Reibbeläge hergestellt. Die Reibbeläge sind entweder auf den Innenlamellen oder den Außenlamellen als gesonderte Reibbeläge angeordnet und mit diesen Lamellen drehfest verbunden.

Neben diesen Systemen wurden im Stand der Technik aber auch schon Systeme beschrieben, die frei drehende Ringe bzw. Reibringe aufweisen. "Frei drehend" bedeutet dabei, dass die Ringe bzw. Reibringe nicht wie die Innenlamellen und die Außenlamellen mit einem Bauelement der Kupplung drehfest verbunden sind.

So beschreibt z.B. die DE 38 01 911 A1 eine Reibbaugruppe gemäß dem Oberbegriff des Anspruchs 1, wobei eine Anordnung für eine Mehrscheiben-LamellenKupplung oder -Bremse mit Lamellenscheiben, die an ihren radial inneren und äußeren Rändern abwechselnd mit einem ersten und einem zweiten Bauteil drehfest verbunden sind und untereinander unter Vermittlung von Reibbelägen zur kraftübertragenden Verbindung kuppelbar sind, wobei die Reibbeläge auf zwischen den Lamellenscheiben angeordneten, frei drehbar gehaltenen Trägerscheiben befestigt sind.

Die DE 37 12 898 A1 beschreibt eine Reibkupplung zum reibschlüssigen Verbinden einer Antriebswelle mit einer Abtriebswelle, mit einem mit der Antriebswelle verbundenen, eine erste Kupplungsfläche aufweisende ersten Kupplungskörper, mit einem mit der Abtriebswelle verbundenen, eine zweite Kupplungsfläche aufweisenden zweiten Kupplungskörper, mit einem zwischen den Kupplungsflächen angeordneten Reibkörper und mit einem Betätigungselement zum Aneinanderpressen der Kupplungskörper im geschlossenen Zustand der Reibkupplung, wobei der Reibkörper im geöffneten Zustand der Reibkupplung lose zwischen den Kupplungsflächen angeordnet ist. Der Außendurchmesser des Reibkörpers ist gleich groß wie oder geringfügig kleiner als der Innendurchmesser der zylindrischen Innenoberfläche des Getriebegehäuses, so dass der Reibkörper auf diese Weise im Getriebegehäuse zentriert und in radialer Richtung gelagert angeordnet ist.

Eine ähnliche Lamellenkupplung ist aus der US 6,006,885 A bekannt. Diese weist frei drehende Reibringe aus einem Carbonmaterial auf, die an einer Innenfläche der Außenlamellen geführt sind.

Auch die FR 2 774 731 A1 beschreibt eine Lamellenkupplung mit zwischen den Innenlamellen und den Außenlamellen angeordneten, frei drehenden Reibringen.

Der vorliegenden Erfindung liegt die Aufgabe zugrunde, eine Reibbaugruppe der eingangs genannten Art hinsichtlich der frei drehenden Reibringe zu verbessern.

Diese Aufgabe wird bei der eingangs genannten Reibbaugruppe dadurch gelöst, dass die frei drehenden Reibringe im Bereich des Innendurchmessers an dem ersten Bauteil geführt sind.

Durch die Innenführung der Reibringe kann im Vergleich zur Außenführung eine höhere Effizienz der Reibbaugruppe erreicht werden. Überraschenderweise weisen nämlich, bei ansonsten gleichen Bedingungen, innen geführte Reibringe über die Anzahl an Schaltzyklen einen höheren Reibwert auf, als außen geführte Reibringe. Damit ist allerdings der Nachteil verbunden, dass die innen geführten Reibringe sich mehr erhitzen, als außen geführte Reibringe.

Darüber hinaus konnte festgestellt werden, dass mit innen geführten Reibringen das Schleppmoment im Vergleich zu außen geführten Reibringen deutlich reduziert werden kann, sodass also die Verlustleistung mit der Reibbaugruppe nach der Erfindung deutlich reduziert werden kann.

Bevorzugt sind die Reibringe in einem Abstand zu einer Oberfläche des ersten Bauteils angeordnet sind, wobei dieser Abstand mindestens 0,05 mm und maximal 3 mm beträgt. Um einen zu hohen Temperaturanstieg im Bereich der Reibringe zu vermeiden, ist es von Vorteil, wenn der Abstand zwischen dem ersten Bauteil und dem Reibring mindestens 0,05 mm beträgt. Wenn der Abstand kleiner als 0,05 mm ist, sitzt der Reibring fester auf dem ersten Bauteil, wodurch zwar die Führung besser ist, aber es kommt aufgrund der Relativbewegung von erstem Bauteil und Reibring zu einer größeren Hitzeentwicklung. Andererseits kann ein Abstand zwischen dem ersten Bauteil und dem Reibring von mehr als 3 mm zu Walkbewegung des Reibringes führen, wodurch dieser einer höheren (mechanischen) Belastung ausgesetzt ist, die letztendlich zur Zerstörung des Reibringes führen kann.

Nach einer weiteren Ausführungsvariante der Reibbaugruppe kann vorgesehen sein, dass die Reibringe im Bereich des Durchbruches eine Querschnittsverjüngung aufweisen. Es kann damit im Bereich der Führung der Reibringe jeweils zumindest eine Schmiermitteltasche zur Verfügung gestellt werden, wodurch in diesem Bereich eine bessere Kühlung der Reibringe und damit eine Überhitzung im Bereich der Führung besser vermieden werden kann. Die Reibringe sind damit besser vor Zerstörung, beispielsweise in Folge von Walkbewegungen, geschützt.

Um dabei die Schmiermittelführung in diesem Bereich zu verbessern, kann vorgesehen sein, dass ein Übergang zwischen zwei verschiedenen Querschnitten in Bereich der Querschnittsverjüngung zumindest mit einer Rundung versehen ist.

Es kann dazu vorgesehen sein, dass die Reibringe aus zumindest einem Harz, in dem zumindest ein Zusatzstoff enthalten ist, oder einem Sinterwerkstoff hergestellt sind, und dass die die Querschnittsverjüngung durch einen verdichteten Bereich gebildet ist. Von Vorteil ist dabei, dass der Reibring über den verdichteten Bereich zusätzlich eine höhere mechanische Festigkeit erhält. Dieser Vorteil überwiegt dabei den damit verbundenen Nachteil, dass die für den Reibschluss hauptsächlich zur Verfügung stehende Fläche des Reibringes, d.h. jener Bereich, der nicht verdichtet oder geringer verdichtet ist, reduziert wird. Als positiver Nebeneffekt wird damit erreicht, dass die Kompressibilität des Reibringes besser eingestellt werden kann, wodurch das Reibverhalten des Reibringes an sich besser an die jeweilige Gegenlamelle angepasst werden kann. Durch die verbesserte mechanische Stabilität kann der Reibring eine hohe Standzeit aufweisen. Von Vorteil ist dabei weiter, dass der Reibring mit einer relativ hohen Festigkeit aus nur einem Material hergestellt werden kann, wodurch die Herstellung des Reibringes entsprechend einfacher erfolgen kann, da das Herstellungsverfahren weniger Schritte umfasst. Durch die Verwendung von nur einem Material kann die Homogenität des Reibringes über sein gesamtes Volumen, d.h. die homogene Verteilung der einzelnen Bestandteile des Materials, verbessert werden. Dies wiederum hat positive Auswirkungen auf das Reibverhalten des Reibringes. Durch die Verwendung von nur einem Material besteht zudem nicht die Gefahr, dass bei aufgebrauchter Reibfläche die Gegenlamelle mit einem metallischen Träger zur Reibung gelangt, was wiederum zur Beschädigung der Gegenlamelle führen würde. Gemäß der Erfindung ist es vorgesehen, dass die der Außenlamelle zugewandte Oberfläche und die der Innenlamelle zugewandte Oberfläche des Reibringes zumindest im Bereich der nichtverdichteten oder geringer verdichteten Bereiche einen arithmetischen Mittenrauwert Ra nach DIN EN ISO 4287:1998 von maximal 12,5 µm aufweist. Zwar könnte mit Rauheitswerten Ra von größer als 12,5 µm eine bessere Reibleistung erzielt werden, allerdings wurde im Zuge von Tests beobachtet, dass bei Rauheitswerten Ra von größer als 12,5 µm, die Oberfläche(n) des Reibringes im Bereich der Führung des Reibringes ausfransen, woraus letztendlich die Zerstörung des Reibringes resultiert. Zur Verbesserung der Stabilität des Reibringes, insbesondere im Bereich der Innenführung, kann vorzugsweise vorgesehen sein, dass ein Verhältnis von einem Außendurchmesser zum Innendurchmesser des Reibringes mindestens 1,2 beträgt.

Gemäß einer anderen Ausführungsvariante der Reibbaugruppe kann vorgesehen sein, dass die Reibringe aus einem Trägerring und darauf angeordneten Reibsegmenten gebildet sind, wobei der Trägerring eine Dicke in axialer Richtung aufweist, die der Dicke der Querschnittsverjüngung entspricht. Es kann damit die Querschnittsverjüngung einfach und ohne spanende Nachbearbeitung des Reibringes hergestellt werden. Zudem kann damit der Vorteil einer Kostenreduktion erreicht werden, indem nämlich die teureren Reibsegmente nicht einstückig hergestellt werden müssen, wodurch der Anteil an Verschnitt, wie er bei einstückigen Reibringen zwangsweise anfällt, reduziert werden kann. Die Reibringe bestehen also aus einer tragenden Struktur, nämlich dem Trägerring, und einer reibenden Struktur, nämlich den Reibsegmenten.

Es kann vorgesehen sein, dass zwischen den Innenlamellen und den Außenlamellen jeweils zumindest zwei Reibringe angeordnet sind, wobei die Reibringe miteinander verbunden sind. Es kann damit die Kompressibilität des Reibringes besser eingestellt werden, wodurch wiederum auf das Verhalten der Innenführung des Reibringes Einfluss genommen werden kann.

Bei einer speziellen Ausführungsvariante der Reibbaugruppe dazu kann vorgesehen sein, dass drei miteinander verbundene Reibringe zwischen den Innenlamellen und den Außenlamellen angeordnet sind, wobei der Durchbruch des mittleren Reibringes zur Ausbildung der Querschnittsverjüngung einen kleineren Innendurchmesser aufweist als die Durchbrüche der beiden äußeren Reibringe. Wie bei der voranstehend beschriebenen Ausführungsvariante der Reibbaugruppe mit dem Trägerring, kann auch mit dieser Ausführungsvariante die Querschnittsverjüngung im Bereich der Innenführung einfach und ohne aufwändige mechanische Nachbearbeitung hergestellt werden.

Zum besseren Verständnis der Erfindung wird diese anhand der nachfolgenden Figuren näher erläutert.

Es zeigen jeweils in vereinfachter, schematischer Darstellung:
- Fig. 1: einen Ausschnitt aus einer Reibbaugruppe mit Innenführung im Schrägansicht;
- Fig. 2: eine Ausführungsvariante eines Reibringes in Ansicht auf die Reibfläche;
- Fig. 3: verschiedene weitere Ausführungsvarianten eines Reibringes in Ansicht auf die Reibfläche;
- Fig. 4: einen Reibring in Seitenansicht mit als Nuten ausgebildeten verdichteten Bereichen;
- Fig. 5: weitere Ausführungsvarianten eines Reibringes in Ansicht auf die Reibfläche mit einer bevorzugten Orientierung von Fasern;
- Fig. 6: einen Ausschnitt aus einer Ausführungsvariante der Reibbaugruppe im Querschnitt mit mehr als einem Reibring zwischen den Außen- und Innenlamellen;
- Fig. 7: einen wellenförmigen Reibring in Seitenansicht geschnitten;
- Fig. 8: eine weitere Ausführungsvariante eines Reibringes in Seitenansicht geschnitten mit einem Trägerelement und darauf angeordneten Reibsegmenten;
- Fig. 9: eine weitere Ausführungsvariante des Reibringes in Seitenansicht geschnitten;
- Fig. 10: einen Ausschnitt aus einer Ausführungsvariante des Reibringes nach Fig. 9 in Seitenansicht geschnitten;
- Fig. 11: die grafische Darstellung des Vergleichs des Reibwertes von Reibbaugruppen;
- Fig. 12: die grafische Darstellung des Temperaturverhaltens verschiedener Reibbaugruppen;
- Fig. 13: die grafische Darstellung des Verlaufs des Schleppmomentes für verschiedene Reibbaugruppen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

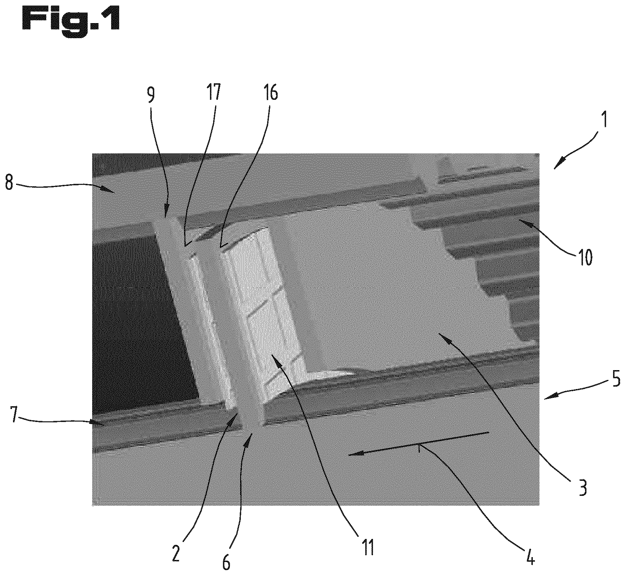

In Fig. 1 ist ein Ausschnitt einer Ausführungsvariante einer Reibbaugruppe 1 in perspektivischer Darstellung gezeigt. Die Reibbaugruppe 1 umfasst mehrere Innenlamellen 2 (in Fig. 1 ist nur eine dargestellt) und mehrere Außenlamellen 3, wobei in einer axialen Richtung 4 der Reibbaugruppe 1 die Innenlamellen 2 und die Außenlamellen 3 abwechselnd angeordnet sind, sodass also in der axialen Richtung 4 auf eine Außenlamelle 3 eine Innenlamelle 2, auf diese wieder eine Außenlamelle 3, usw. folgt.

Obwohl in Fig. 1 nur eine Innenlamelle 2 und zwei Außenlamellen 3 dargestellt sind, sei darauf hingewiesen, dass diese Anzahl an Lamellen nicht beschränkend zu verstehen ist. Vielmehr kann die Reibbaugruppe 1 beispielsweise zwischen einer und fünfzehn Innenlamellen 2 und zwischen einer und fünfzehn Außenlamellen 3 aufweisen. Die genaue Anzahl an Innenlamellen 2 und Außenlamellen 3 richtet sich nach der jeweiligen Verwendung der Reibbaugruppe 1.

Die Reibbaugruppe 1 ist insbesondere eine Lamellenkupplung. Es besteht jedoch auch die Möglichkeit, diese als Lamellenbremse auszuführen. Derartige Reibbaugruppen an sich sind aus dem Stand der Technik bekannt, sodass zu weiteren Details, wie z.B. Betätigungsorgane, etc. darauf verwiesen sei.

Die Innenlamellen 2 sind drehfest mit einem ersten Bauteil 5, beispielsweise einer Welle, verbunden. Dazu können die Innenlamellen 2, die als kreisringförmige Scheiben ausgebildet sind, an einer radial inneren Stirnfläche eine Innenverzahnung 6 aufweisen, die in eine Außenverzahnung 7 des ersten Bauteils 5 eingreift. Die Innenlamellen 2, die einen entsprechenden Durchbruch aufweisen, überragen also das erste Bauteil 5 in radialer Richtung, und sind insbesondere auf das erste Bauteil 5 aufgesteckt.

Die Außenlamellen 3 sind mit einem zweiten Bauteil 8, das beispielsweise zumindest annähernd hülsenförmig ausgebildet ist, drehfest verbunden. Dazu können die Außenlamellen 3, die wie die Innenlamellen 2 als kreisringförmige Scheiben ausgebildet sind, an einer radial äußeren Stirnfläche eine Außenverzahnung 9 aufweisen, die in eine Innenverzahnung 10 an einer radial inneren Oberfläche des zweiten Bauteils 9 eingreift. Die Außenlamellen 3 ragen also von der inneren Oberfläche des zweiten Bauteils 8 radial nach innen in Richtung auf den ersten Bauteil 5. Die Außenlamellen 3 liegen jedoch nicht an dem ersten Bauteil 5 an, sondern enden in einem Abstand zu diesem. Ebenso wenig liegen die Innenlamellen 2 an der inneren Oberfläche des zweiten Bauteils 8 an, sondern enden in einem Abstand zu diesem.

Zwischen jeder Innenlamelle 2 und jeder Außenlamelle 3 ist zumindest ein Reibring 11 angeordnet, sodass also die Innenlamellen 2 durch die Reibringe 11 von den Außenlamellen 3 in der axialen Richtung 4 der Reibbaugruppe 1 getrennt sind.

Hinsichtlich weiterer Details zu den Reibringen 11 sei auf nachstehende Ausführungen verwiesen.

Bevorzugt bestehen die Innenlamellen 2 und die Außenlamellen 3 aus einem Stahl. Sie können jedoch auch aus einem anderen geeigneten, insbesondere metallischen, Werkstoff bestehen. Die Innenlamellen 2 und die Außenlamellen 3 können beispielsweise durch Stanzen, Laserschneiden, oder dgl. hergestellt werden. Vorzugsweise weisen sie einen arithmetischen Mittenrauwert Ra nach DIN EN ISO 4287:1998 von maximal 1 µm, insbesondere maximal 0,6 µm auf, wenn die Reibringe 11 aus einem harzgebundenen Compositmaterial, wie dies nachstehend noch erläutert wird, bestehen, oder einen arithmetischen Mittenrauwert Ra nach DIN EN ISO 4287:1998 von maximal 2 µm, insbesondere maximal 1,2 µm auf, wenn die Reibringe 11 aus einem Sinterwerkstoff bestehen.

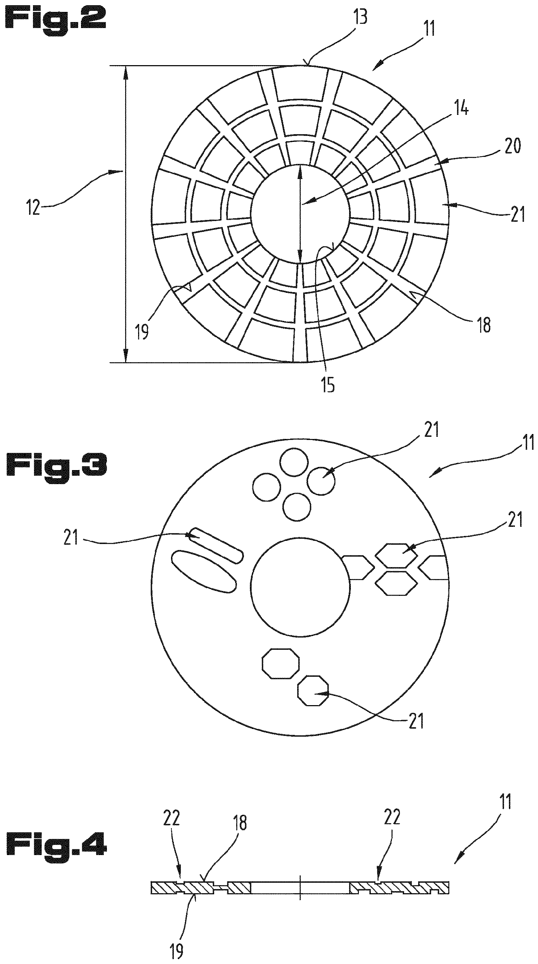

Die Reibringe 11 sind innen geführt, d.h. innenzentriert, angeordnet. Dazu weisen die ebenfalls kreisringförmig und zumindest annähernd scheibenförmig ausgebildeten Reibringe 11 einen Außendurchmesser 12 (Fig. 2) auf, der kleiner ist, als ein Innendurchmesser des zweiten Bauteils 8 im Bereich einer radial äußeren Stirnfläche 13 der Reibringe 11. Im konkreten Ausführungsbeispiel der Reibbaugruppe 1 nach Fig. 1 ist dieser Innendurchmesser des zweiten Bauteils 8 der Kopfkreisdurchmesser der Innenverzahnung 10 des zweiten Bauteils 8.

Insbesondere kann der Außendurchmesser 12 der Reibringe 11 um mindestens 5 %, insbesondere mindestens 7 %, kleiner sein, als der Innendurchmesser des zweiten Bauteils 8, also im konkreten Ausführungsbeispiel der Reibbaugruppe 1 nach Fig. 1 als der Kopfkreisdurchmesser der Innenverzahnung 10 des zweiten Bauteils 8.

Der Außendurchmesser 12 der Reibringe 11 ist also so bemessen, dass die Reibringe 11 jedenfalls nicht zur Anlage an die Oberfläche des zweiten Bauteils 8 gelangen.

Ein Innendurchmesser 14 (Fig. 2) eines Durchbruches der Reibringe 11 ist hingegen so bemessen, dass dieser gleich groß oder nur geringfügig größer ist, als der Außendurchmesser des ersten Bauteils 5 im Bereich einer radial inneren Stirnfläche 15 der Reibringe 11. Im konkreten Ausführungsbeispiel der Reibbaugruppe 1 nach Fig. 1 ist dieser Außendurchmesser des ersten Bauteils 5 der Kopfkreisdurchmesser der Außenverzahnung 7 des ersten Bauteils 5.

Mit "geringfügig größer" ist in Bezug auf den Innendurchmesser 14 der Reibringe 11 gemeint, dass dieser Innendurchmesser 14 um maximal 2 %, insbesondere maximal 1 %, größer ist, als besagter Außendurchmesser des ersten Bauteils 5.

Die Reibringe 11 liegen also entweder am ersten Bauteil 5 an oder sind nur geringfügig beabstandet zu diesem ersten Bauteil 5.

Die Reibringe 11 sind also geführt und jedenfalls frei drehend in der Reibbaugruppe 1 angeordnet, d.h. sie weisen weder eine drehfeste Verbindung mit dem ersten Bauteil 5 noch eine drehfeste Verbindung mit dem zweiten Bauteil 8 der Reibbaugruppe 1 auf. Weiter sind sie nicht drehfest mit den Innenlamellen 2 und den Außenlamellen 3 verbunden.

Wie an sich bekannt, sind die Innenlamellen 2 relativ zu den Außenlamellen 3 oder die Außenlamellen 3 relativ zu den Innenlamellen 2 in axialer Richtung 4 verstellbar, sodass Oberflächen 16 der Innenlamellen 2 und Oberflächen 17 der Außenlamellen 3 mit den Reibringen 11 in Kontakt treten und damit in der geschlossenen Stellung der Kupplung zur Drehmomentübertragung vom ersten Bauteil 5 auf den zweiten Bauteil 8 der Reibbaugruppe 1 - oder umgekehrt - einen Reibschluss mit den Reibringen 11 ausbilden. (Bei der Ausbildung der Reibbaugruppe 1 als Bremse erfolgt die Ausbildung des Reibschlusses zwischen den Lamellen und den Reibringen 11 in analoger Weise.)

In Fig. 2 ist eine Ausführungsvariante eines Reibringes 11 dargestellt.

Der Reibring 11 ist einstückig ausgebildet, d.h. insbesondere dass er kein gesondertes Trägerelement aufweist, auf dem Reibbeläge angeordnet sind.

Der Reibring 11 weist eine Matrix auf, in der zumindest eine Zusatzstoff verteilt, insbesondere zumindest annähernd homogen verteilt, enthalten ist. Mit "zumindest annährend homogen" ist dabei gemeint, dass bereichsweise Konzentrationsunterschiede an den einzelnen Bestandteilen, die aufgrund der industriellen Herstellung entstehen, zugelassen sind.

Es besteht aber auch die Möglichkeit, dass zumindest ein Zusatzstoff bewusst inhomogen verteilt wird, um damit das Eigenschaftsprofil des Reibringes 11 an den jeweiligen Einsatzzweck anzupassen. In der bevorzugten Ausführungsvariante des Reibringes 11 weist dieser jedoch eine zumindest annähernd homogene Verteilung des zumindest einen Zusatzstoffes in der Matrix auf.

Die Matrix des Reibringes 11 wird bevorzugt durch ein Harz gebildet. Als Harz kann beispielsweise ein Phenolharz, ein Phenol/Formaldeydharz, ein Epoxydharz, ein Melaminharz, ein Cyanatharz, ein Silikonharz, etc. oder ein Harzgemische verwendet werden. Insbesondere wird eine hitzebeständiges Harz mit einer Hitzedauerbeständigkeit von mindestens 200 °C verwendet, beispielsweise ein Epoxidharz mit einer Hitzedauerbeständigkeit von 200 °C oder ein silikonartiges Harz mit einer Hitzedauerbeständigkeit von 270 °C.

Das Harz dient als Bindemittel um die Teilchen bzw. Fasern des zumindest einen Zusatzstoffes zusammenzuhalten und so in den Reibring 11 einzubinden.

Der Anteil des Harzes an dem Reibring 11 kann zwischen 15 Gew.-% und 85 Gew.-%, insbesondere zwischen 40 Gew.-% und 75 Gew.-%, betragen.

Der zumindest eine Zusatzstoff kann durch einen Faserwerkstoff, wie beispielsweise ein Papierfasern, Karbonfasern, Aramidfasern, etc. gebildet sein. Insbesondere ist der zumindest eine Faserwerkstoff mit dem Harz getränkt.

Wenn als Faserwerkstoff ein Papier verwendet wird, weist dieses bevorzugt ein Flächengewicht auf, das ausgewählt ist aus einem Bereich mit einer unteren Grenze von 260 g/m² und einer oberen Grenze von 1.400 g/m².

Selbstverständlich können in der Matrix auch diverse übliche Hilfsstoffe und Verarbeitungshilfsmittel enthalten sein.

Gegebenenfalls können in dem Reibringen 11, d.h. in der Matrix, auch Reibpartikel wie z.B. SiO₂, Al₂O₃, etc. enthalten sein. Die Reibpartikel weisen bevorzugt eine mittlere Größe zwischen 10 m und 100 µm auf, da damit die Kompression des Reibringes 11 beeinflusst werden kann.

Insbesondere können die Reibpartikel in einem Anteil zugesetzt sein, der ausgewählt ist aus einem Bereich mit einer unteren Grenze von 2 Gew.-% und einer oberen Grenze von 20 Gew.-%, vorzugsweise aus einem Bereich mit einer unteren Grenze von 5 Gew.-% und einer oberen Grenze von 10 Gew.-%.

Sämtliche Angaben zur Zusammensetzung des Reibringes 11 bzw. der Reibringe 11 - vorzugsweise sind sämtliche Reibringe 11 in der Reibbaugruppe 1 gleich aufgebaut und gleich zusammengesetzt - sind bezogen auf das Gesamtgewicht des Reibringes 11.

Neben der Ausbildung des Reibringes 11 als Compositmaterial mit einer Harzmatrix kann der Reibring 11 auch aus einem Sinterwerkstoff bestehen, beispielsweise mit einer metallischen Matrix aus Kupfer, in der gegebenenfalls zumindest ein weiteres Metall, wie beispielsweise Eisen, oder ein anderer Zusatzstoff, wie z.B. Silizium, ein silikatischer Zusatzstoff, insbesondere ausgewählt aus einer Gruppe umfassend Glimmer, Feldspat, Kieselgur, Mullit, Siliziumdioxid, Festschmierstoffe, wie z.B. Graphit, MoS₂, etc., Hartpartikel, wie Korund, Glas, Aluminiumoxid (Al₂O₃), sowie Mischungen daraus, enthalten ist.

Der Anteil des zumindest einen Zusatzstoffes in dem Sinterreibring kann ausgewählt sein aus einem Bereich mit einer unteren Grenze von 5 Gew.-% und einer oberen Grenze von 35 Gew.-%. Den Rest bildet die Matrix.

Der Reibring 11 weist auf einer Oberfläche 18, die in der Reibbaugruppe 1 der benachbarten Innenlamelle 2 zugewandt ist, und auf einer Oberfläche 19, die in der Reibbaugruppe 1 der benachbarten Außenlamelle 3 zugewandt ist, jeweils zumindest einen verdichteten Bereich 20 und zumindest einen nicht verdichteten Bereich oder in Bezug auf den verdichteten Bereich 19 geringer verdichteten Bereich 21 auf.

Es sei an dieser Stelle erwähnt, dass zwar diese Ausführung des Reibringes 11 mit den verdichteten Bereich(en) 20 und den nicht bzw. geringer verdichteten Bereich(en) 21 bevorzugt ist, da damit den Reibringen 11 eine höhere mechanische Stabilität verliehen werden kann. Es können aber ebenso Reibringe 11 verwendet werden, die eine derartige Strukturierung mit verdichteten Bereichen 20 und nicht bzw. geringer verdichteten Bereichen 21 nicht aufweisen, sondern über den gesamten Reibring 11 eine zumindest annähernd gleichbleibende Dichte aufweisen.

Für den Fall, dass pro Oberfläche 18, 19 des Reibringes 11 jeweils nur ein verdichteter Bereich 20 ausgebildet ist, kann dieser beispielsweise kreisringförmig ausgebildet sein und damit die nicht verdichteten oder geringer verdichteten Bereiche 21 einer Oberfläche 18, 19 voneinander trennen.

In der bevorzugten Ausführungsvariante des Reibringes 11 sind jedoch mehrere verdichtete Bereiche 20 ausgebildet, insbesondere gleichmäßig über die Oberflächen 18, 19 verteilt angeordnet, wie dies beispielsweise aus Fig. 2 ersichtlich ist.

Die geringer verdichteten Bereiche 21 können beispielsweise eine Dichte aufweisen, die um 10 % bis 90 %, insbesondere um 20 % bis 70 %, geringer ist, als die Dichte der verdichteten Bereiche 20. Beispielsweise können die nicht verdichteten Bereiche 21 eine Dichte aufweisen, die ausgewählt ist aus einem Bereich mit einer unteren Grenze von 0,9 g/cm³ und einer oberen Grenze von 2,4 g/cm³, insbesondere ausgewählt aus einem Bereich mit einer unteren Grenze von 1,2 g/cm³ und einer oberen Grenze von 2,2 g/cm³.

Die verdichteten Bereiche 20 können beispielsweis eine Dichte aufweisen, die ausgewählt ist aus einem Bereich mit einer unteren Grenze von 3 g/cm³ und einer oberen Grenze von 8 g/cm³, insbesondere ausgewählt aus einem Bereich mit einer unteren Grenze von 4 g/cm³ und einer oberen Grenze von 7 g/cm³.

Die nicht verdichteten bzw. geringer verdichteten Bereiche 21 können - jeweils in Draufsicht auf die Oberflächen 18, 19 betrachtet - quadratisch, wie dies in den Fig. 1 gezeigt ist, oder trapezförmig, wie dies in Fig. 2 gezeigt ist, ausgebildet sein. Es sind aber auch andere Ausbildungen möglich, wie dies aus Fig. 3 ersichtlich ist, in der mehrere verschiedene Ausführungsformen des Reibringes 11 dargestellt sind. Beispielsweise können die nicht verdichteten bzw. geringer verdichteten Bereiche 21 zumindest annähernd elliptisch, zumindest annähernd kreisrund, sechseckförmig oder achteckförmig bzw. generell polygonal ausgebildet sein. Ebenso ist es möglich, dass die nicht verdichteten bzw. geringer verdichteten Bereiche 21 kreisringförmig ausgebildet sind (nicht dargestellt).

Bei Ausbildung eines Waffelmusters mit quadratischen nicht verdichteten bzw. geringer verdichteten Bereichen 20, wie dies in den Fig. 1 dargestellt ist, ist es bevorzugt, wenn die Kantenlängen des Quadrates maximal 4 mm, beispielsweise 0,75 mm, beträgt, da damit die Stabilität des Reibringes 11 verbessert werden kann.

Bevorzugt weisen die nicht verdichteten bzw. geringer verdichteten Bereiche 21 auf beiden Oberflächen 18, 19 des Reibringes 11 die gleiche Gestalt auf. Es ist aber auch möglich, die nicht verdichteten bzw. geringer verdichteten Bereiche 21 auf der Oberfläche 18 anders auszubilden als auf der Oberfläche 19, beispielsweise mit einer unterschiedlichen Geometrie und/oder mit einer unterschiedlichen Größe auszubilden.

Wie insbesondere aus Fig. 2 ersichtlich ist, können zumindest einzelne, vorzugsweise alle bzw. eine Mehrzahl, d.h. mehr als 50 %, insbesondere mehr als 60 %, der nicht verdichteten bzw. geringer verdichteten Bereiche 21 von den verdichteten Bereichen 20 ringförmig umgeben sein, sodass die nicht verdichteten bzw. geringer verdichteten Bereiche 21 lediglich in diskreten Bereichen auf den Oberflächen 18, 19 des Reibringes 11 angeordnet sind. Sollten dabei, wie dies aus Fig. 2 oder Fig. 3 zu ersehen ist, die nicht verdichteten bzw. geringer verdichteten Bereiche 21 bis an die Stirnflächen 13, 15 des Reibringes 11, also an die radial äußere Kante und/oder an die radial innere Kante des Reibringes 11, sich erstreckend angeordnet sein, dann sind diese nicht verdichteten bzw. geringer verdichteten Bereiche 21 selbstverständlich nicht vollumfänglich und geschlossen von den verdichteten Bereichen 20 umgeben.

Gemäß einer bevorzugten Ausführungsvariante dazu kann vorgesehene sein, dass die nicht verdichteten oder geringer verdichteten Bereiche 21 jeweils eine Fläche von maximal 2 cm², insbesondere maximal 1,6 cm², aufweisen. Dabei können alle nicht verdichteten oder geringer verdichteten Bereiche 21 einer Oberfläche 18, 19 gleich groß sein, oder, wie dies beispielsweise in Fig. 2 dargestellt ist, können die nicht verdichteten oder geringer verdichteten Bereiche 21 einer Oberfläche 18, 19 eine unterschiedliche Flächenausdehnung aufweisen, beispielsweise ausgehend von der radial äußeren Stirnfläche 13 in Richtung auf die radial innere Stirnfläche 15 des Reibringes 11 kleiner werden.

Es sei an dieser Stelle darauf hingewiesen, dass es möglich ist, auf zumindest einer der Oberflächen 18, 19, vorzugsweise auf beiden, neben den verdichteten Bereichen 20 sowohl nicht verdichtete Bereiche 21 als auch mit Bezug auf die verdichteten Bereiche 20 geringer verdichtete Bereiche 21 anzuordnen, um damit die Kompressibilität des Reibringes 11 auf ein gewünschtes Ausmaß einzustellen.

Die verdichteten Bereiche 20 können zumindest annähernd ebenflächig, insbesondere ebenflächig, mit den nicht verdichteten oder geringer verdichteten Bereichen 21 ausgebildet sein. Dazu kann in den Bereichen der Oberflächen 18, 19 des Reibringes 11, in denen die verdichteten Bereiche 20 ausgebildet werden sollen, mehr Material angeordnet werden, sodass sich beim Verdichten dieser Bereiche eine ebenflächige Ausbildung erreichen lässt.

In der bevorzugten Ausführungsvariante des Reibringes 11 sind die verdichteten Bereiche 20 aber in Bezug auf die nicht bzw. geringer verdichteten Bereiche 21 vertieft, insbesondere nutförmig, ausgebildet, wie dies beispielsweise in Fig. 4 dargestellt ist. Die Ausbildung von Nuten 22 in den Oberflächen 18, 19 des Reibringes 11 kann mit einem entsprechenden Presswerkzeug erfolgen, wobei der Reibring 11 zwischen zwei Pressstempeln verpresst wird, die an den Stellen, an denen die verdichteten Bereiche 20 ausgebildet werden sollen, Stege aufweisen, die in den Reibring 11 gedrückt werden und damit die Verdichtung erzeugen. Es ist aber auch möglich, zur Herstellung der Nuten 22 andere Verfahren anzuwenden. Beispielsweise können die Nuten 22 mittels spanenden Verfahren, z.B. Schleifen, hergestellt werden.

In Fig. 4 sind zwei Ausführungsvarianten des Reibringes 11 dargestellt. In linken Teil der Fig. 4 sind die Nuten 22, also die verdichteten Bereiche 20, zueinander genau gegenüberliegend in den Oberflächen 18, 19 angeordnet, also deckungsgleich angeordnet. Im rechten Teil der Fig. 4 sind die Nuten 22 in der Oberfläche 18 in Umfangsrichtung des Reibringes 11 gegen die Nuten 22 in der Oberfläche 19 versetzt angeordnet, sodass sich die Nuten 22 nicht mehr genau überdecken. Es kann mit letzterer Ausführungsvariante erreicht werden, dass die verdichteten Bereiche 20 auch die nicht verdichteten bzw. geringer verdichteten Bereiche 21 beim Schließen der Reibbaugruppe 1 abstützen. Damit kann die Kompressibilität des Reibringes 11 eingestellt werden, da durch den Versatz der verdichteten Bereiche 20 lokal unterschiedliche Dichten erzeugt werden können. Der Versatz kann beispielsweise ausgewählt werden aus einem Bereich von 5 % bis 50 % der Ausdehnung des jeweiligen an den verdichteten Bereich 20 anschließenden nicht verdichteten bzw. geringer verdichteten Bereich 21 in Umfangsrichtung.

Die Ausführungsvarianten des Reibringes 11 nach Fig. 4 sind nicht nur mit den Nuten 22 als verdichtete Bereiche 20 möglich sondern generell für die verdichteten Bereiche 20 zu sehen, d.h. auch wenn die verdichteten Bereiche 20 zumindest annähernd ebenflächig oder ebenflächig mit den nicht verdichteten oder geringer verdichteten Bereichen 21 ausgeführt sind, wie dies voranstehend ausgeführt wurde.

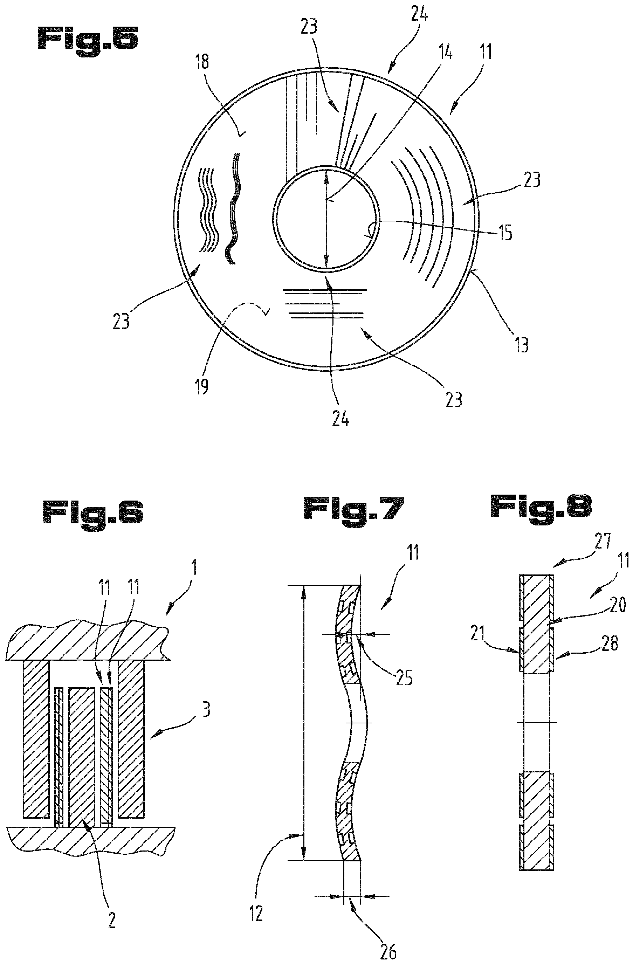

Fig. 5 zeigt weitere Ausführungsvarianten des Reibringes 11. Der Reibring 11 besteht neben der Matrix aus zumindest einem Zusatzstoff, wie dies voranstehend bereits ausgeführt wurde. Dieser Zusatzstoff oder zumindest einer der Zusatzstoffe kann durch Fasern 23 gebildet sein, beispielsweise Carbonfasern oder Zellulosefasern, wobei in letzterem Fall der Zusatzstoff oder zumindest einer der Zusatzstoffe vorzugsweise ein Papier ist, wie es üblicherweise in Reibbelägen eingesetzt wird. Es kann nun vorgesehen werden, dass zumindest 50 % der Fasern 23, insbesondere zumindest 70 % der Fasern 23, bezogen auf den Gesamtanteil der Fasern 23 im Reibring 11, zumindest annähernd gleich orientiert sind. Diese Orientierung der Fasern 23 kann je nach Einstellung gewünschter mechanischer Eigenschaften der Reibringes 11 beispielsweise in radialer Richtung oder in Umfangsrichtung oder linear in Richtung einer Tangente oder wellenförmig sein, wie dies in Fig. 5 dargestellt ist. Es ist auch möglich, dass die Fasern 23 in mehreren Richtungen zumindest annähernd gleich orientiert werden, wobei ein erster Anteil der Fasern 23 in eine Richtung und ein zweiter Anteil der Fasern 23 in eine weitere Richtung orientiert werden. Es ist dabei auch möglich, dass der Anteil der Fasern 23 im Bereich der Oberfläche 18 des Reibringes 11 anders orientiert sind als der Anteil der Fasern 23 im Bereich der Oberfläche 19.

Fig. 5 zeigt noch eine weitere Ausführungsvariante des Reibringes 11, bei der der zumindest eine Zusatzstoff oder zumindest einer der Zusatzstoffe durch ein drahtförmiges Verstärkungselement 24 gebildet ist, das im Bereich der radial äußeren Stirnfläche 13 und/oder im Bereich der radial inneren Stirnfläche 15 des Reibringes 11 angeordnet ist. Das Verstärkungselement 24 kann oder die Verstärkungselemente 24 können in der Stirnfläche 13 und/oder 15 oder geringfügig beabstandet dazu angeordnet sein. Mit "geringfügig" ist dabei gemeint, dass das Verstärkungselement 24 um einen Abstand von der jeweiligen Stirnfläche 13, 15 angeordnet ist, der maximal 10 %, insbesondere maximal 5 %, des Außendurchmessers 12 (Fig. 2) des Reibringes 11 im Falle des radial äußeren Verstärkungselementes 24 und der der maximal 10 %, insbesondere maximal 5 %, des Innendurchmessers 14 des Reibringes 11 im Falle des radial inneren Verstärkungselementes 24 entspricht.

Wie aus Fig. 6 ersichtlich ist, kann gemäß einer anderen Ausführungsvariante der Reibbaugruppe 1 zur Einstellung der Kompressibilität vorgesehen sein, dass zwischen den Innenlamellen 2 und den Außenlamellen 3 jeweils zumindest zwei Reibringe 11 angeordnet sind, wobei die Reibringe 11 miteinander verbunden sind, beispielsweise miteinander verklebt sind.

Der Reibring 11 kann - abgesehen von den Nuten 22 - ebenflächig ausgebildet sein. Es besteht aber nach einer weiteren Ausführungsvariante des Reibringes 11 die Möglichkeit, diesen bewusst wellenförmig auszubilden, wie dies aus Fig. 7 ersichtlich ist. Eine maximale Tiefe 25 der Wellentäler kann dabei ausgewählt sein aus einem Bereich von 1 % bis 80 %, insbesondere aus einem Bereich von 20 % bis 70 %, einer Dicke 26 des Reibringes 11.

Es ist weiter möglich, dass die Wellung im Verhältnis zum Außendurchmesser 12 des Reibringes 11 nicht größer ist, als 5 %, insbesondere nicht größer als 4 %. Die Wellung kann beispielsweise beim Aushärteprozess des Harzes, das für den Reibring 11 verwendet wird, in den Reibring 11 eingebracht werden.

Bei sämtlichen Ausführungsvarianten des Reibringes 11 kann die Dicke 26 ausgewählt sein aus einem Bereich von 0,25 mm bis 1,75 mm, insbesondere aus einem Bereich von 0,4 mm bis 1,5 mm.

Obwohl die einstückige Ausführung des Reibringes 11 die bevorzugte ist, besteht nach einer weiteren, in Fig. 8 gezeigten Ausführungsvariante des Reibringes 11 die Möglichkeit, dass die Reibringe 11 aus einem Trägerring 27 und darauf angeordneten Reibsegmenten 28 gebildet sind, wobei der Trägerring 27 insbesondere aus einem harzgetränkten Papier hergestellt ist. Die Reibsegmente 28 bestehen ebenfalls aus zumindest einem Harz als Matrix, in der zumindest ein Zusatzstoff enthalten ist, wie dies voranstehend ausgeführt wurde, und sind mit dem Trägerring 27 verbunden. Die Verbindung von Trägerring 27 und Reibsegmenten 28 kann über das zumindest eine Harz erfolgen, wobei vorzugsweise für den Trägerring 27 und die Reibsegmente 28 das gleiche Harz verwendet wird.

Die Reibsegmente 28 können hinsichtlich Form und Größe entsprechend den nicht verdichteten bzw. geringer verdichten Bereichen 21 ausgebildet sein, wie dies voranstehend ausgeführt wurde. Es besteht aber auch die Möglichkeit, dass die Reibsegmente 28 mehr als einen nicht verdichteten bzw. geringer verdichteten Bereich 21 aufweisen.

Die verdichteten Bereiche 20 werden vorzugsweise durch den Trägerring 27 gebildet. Es kann jedoch vorgesehen sein, dass die verdichteten Bereiche 20 auf den Reibsegmenten 28 ausgebildet sind.

Bei sämtlichen Ausführungsvarianten des Reibringes 11 weisen zumindest die nicht verdichteten oder geringer verdichteten Bereiche 21 eine Porosität auf, die mindestens 20 % und maximal 80 %, insbesondere mindestens 40 % und maximal 80%, beträgt. Es ist dabei auch möglich, dass die verdichteten Bereiche 20 diese Porosität aufweisen. Die Porosität ist dabei definiert als das Verhältnis von Volldichte des Materials des Reibringes 11 zu dessen Ist-Dichte. Über die Porosität kann u.a. die Schmiermittelaufnahme des Reibringes 11 und die Schmiermittelweiterleitung und damit die Kühlung des Reibringes 11 beeinflusst werden.

Es sei erwähnt, dass der Reibring 11 in der bevorzugten Ausführungsvariante der Reibbaugruppe 1 nasslaufend ist, also mit einem Schmiermittel benetzt wird.

Es ist weiter bei sämtlichen Ausführungsvarianten des Reibringes 11 bevorzugt, wenn ein Verhältnis des Außendurchmessers 12 zum Innendurchmesser 14 des Reibringes 11 mindestens 1,2, insbesondere mindestens 1,5, beträgt.

Zusätzlich dazu oder alternativ dazu ist es bevorzugt, wenn bei sämtlichen Ausführungsvarianten des Reibringes 11 die Oberfläche 18 und/oder Oberfläche 19 zumindest im Bereich der nichtverdichteten oder geringer verdichteten Bereiche einen arithmetischen Mittenrauwert Ra nach DIN EN ISO 4287:1998 von maximal 12,5 µm, insbesondere maximal 9,8 µm, aufweist bzw. aufweisen.

Für die Innenzentrierung der Reibringe 11 in der Reibbaugruppe 1, wie diese in Fig. 1 dargestellt ist, ist es weiter von Vorteil, wenn die Reibringe 11 in einem Abstand zwischen der radial äußeren Oberfläche des ersten Bauteils 5, insbesondere der Welle, angeordnet sind, der mindestens 0,05 mm und maximal 3 mm beträgt.

Für den Fall, dass als Matrix des Reibringes 11 ein Harz verwendet wird, kann dieses auch carbonisiert werden.

Vorzugsweise wird die Zusammensetzung des Reibringes 11 so gewählt, dass dieser eine Wärmeleitfähigkeit aufweist, die bei 20 °C mindestens 0,1 W/mK, insbesondere mindestens 0,5 W/mK, bevorzugt zumindest 2 W/mK, beträgt. Diese Wärmeleitfähigkeit kann durch den Einsatz von zumindest einem metallische Werkstoff und/oder Carbonfasern, aber auch durch eine entsprechend hohe Dichte des Reibringes 11 zumindest in den verdichteten Bereichen 20, gegebenenfalls auch in den nicht verdichteten bzw. geringer verdichteten Bereichen 21 erreicht werden. Eine beispielhafte Zusammensetzung weist 35 Gew.-% bis 45 Gew._% Baumwolle, 10 Gew.-% bis 15 Gew.-% Graphit, 10 Gew.-% bis 15 Gew.-% Glasfasern, 10 Gew.-% bis 15 Gew.-% Carbonfasern, 5 Gew._% bis 15 Gew.-% Latex, 5 Gew.-% bis 8 Gew.-% Kalziumsilikat auf.

Für eine hohe Wärmeleitfähigkeit ist es von Vorteil, wenn der Anteil an Graphit und/oder Carbonfasern höher gewählt wird. Weiter ist es für eine geringe Wärmeleitfähigkeit von Vorteil, wenn der Anteil an Baumwollfasern gering und der Anteil an Glasfasern und/oder Carbonfasern höher ist.

Vorzugsweise weist der Reibring 11 eine thermische Ausdehnung im Bereich von -1,0 E-6 bis -5,0 E-6 1/K bei Temperaturen im Bereich von 100 °C bis 200 °C auf. Dies kann z.B. durch den Einsatz von Carbonfasern als zumindest ein Zusatzstoff erreicht werden. Eine beispielhafte Zusammensetzung weist 15 Gew.-% bis 25 Gew._% Baumwolle, 10 Gew.-% bis 15 Gew.-% Graphit, 20 Gew.-% bis 25 Gew.-% Glasfasern, 20 Gew.-% bis 25 Gew.-% Carbonfasern, 5 Gew._% bis 15 Gew.-% Latex, 5 Gew.-% bis 8 Gew.-% Kalziumsilikat auf.

Es kann damit erreicht werden, dass sich der Reibring 11 bei Temperaturerhöhung nicht bzw. nicht wesentlich ausdehnt. Der Reibring 11 ist innen geführt. Damit der Reibring 11 keine Walkbewegung beim Drehen erzeugt, ist es von Vorteil, wenn der Reibring 11 kein bzw. möglichst wenig Spiel hat, wie dies voranstehend ausgeführt wurde. Wenn es infolge der Temperatur zu einer größeren Ausdehnung kommt als Toleranz vorgesehen ist, kann dies zu einer Zerstörung des Reibring 11 führen. Durch die bevorzugte thermische Ausdehnung des Reibringes 11 kann dies verhindert werden.

Es ist weiter bei sämtlichen Ausführungsvarianten bevorzugt, wenn das Poisson Verhältnis, d. h. die relative Ausdehnung des Reibringes 11 bei Druckbeaufschlagung in radialer Richtung, nicht größer ist als 0,1 bis 0,3, insbesondere nicht größer ist als 0,2. Es kann damit verhindert werden, dass es infolge des Druckes, der auf den Reibring 11 beim Schließen der Reibbaugruppe 1 wirkt, zu einer größeren Ausdehnung kommt als Toleranz vorgesehen ist. Dies wiederum kann einer Zerstörung des Reibringes 11 vorbeugen. Das Poisson Verhältnis kann gemäß DIN 51909 (1998) oder DIN 51045 oder DIN EN 821-1 (1995) oder DIN V ENV 1159-1 (1993) bestimmt werden.

Vorzugsweise weist der Reibring 11 auf beiden Oberflächen 17, 18 dasselbe tribologische Verhalten auf.

Der Reibring 11 findet vorzugsweise Einsatz in Anwendungen in denen
- der maximale Druck nicht größer ist als 10 N/mm²,
- die Gleitgeschwindigkeit nicht größer ist als 50 m/s
- die Energie pro Schaltung nicht größer ist als 5 J/mm². Die Flächenangaben beziehen sich auf die Brutto-Flächen.

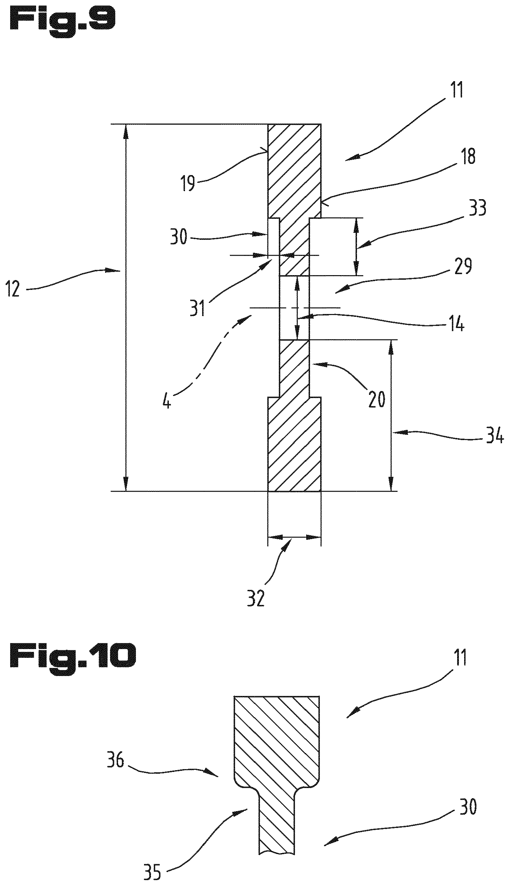

In den Fig. 9 und 10 sind weitere und gegebenenfalls für sich eigenständige Ausführungsformen der Reibbaugruppe 1, d.h. des Reibringes 11 der Reibbaugruppe 1, gezeigt, wobei wiederum für gleiche Teile gleiche Bezugszeichen bzw. Bauteilbezeichnungen wie in den Fig. 1 bis 8 verwendet werden. Um unnötige Wiederholungen zu vermeiden, wird auf die detaillierte Beschreibung zu den Fig. 1 bis 8 hingewiesen bzw. Bezug genommen.

Bei dieser Ausführungsvariante weist der Reibring 11 im Bereich eines Durchbruches 29, durch den, wie voranstehend ausgeführt wurde, das erste Bauteil 5 (Fig. 1) ragt, also im Bereich der Innenführung, eine Querschnittsverjüngung 30 auf. Diese Querschnittsverjüngung 30 dient vornehmlich der Zuführung eines Schmiermittels in den Bereich der Innenführung des Reibringes 11.

Vorzugsweise ist die Querschnittsverjüngung 30 beidseitig, d.h. sowohl an der Oberfläche 18 als auch an der Oberfläche 19 des Reibringes 11, ausgebildet. Es besteht aber auch die Möglichkeit, dass diese Querschnittsverjüngung 30 in nur einer der beiden Oberflächen 18, 19 des Reibringes 11 ausgebildet ist. Diese Ausführungsvariante des Reibringes 11 kann insbesondere dann Verwendung finden, wenn mehrere Reibringe 11 zwischen jeweils einer Innenlamelle 2 und einer Außenlamelle 3 (Fig. 1) angeordnet und insbesondere miteinander verbunden sind.

Vorzugsweise weist die Querschnittsverjüngung 30 in der axialen Richtung 4 eine Breite 31 auf, die zwischen 1 % und 30 %, insbesondere zwischen 4 % und 20 %, einer Gesamtbreite 32 des Reibringes 11 in der axialen Richtung 4 entspricht.

Es ist weiter bevorzugt, wenn eine Höhe 33 der Querschnittsverjüngung 30 in radialer Richtung zwischen 1 % und 20 %, insbesondere zwischen 5 % und 15 %, einer Gesamthöhe des Reibringes zwischen dem Außendurchmesser 12 und dem Innendurchmesser 14 des Reibringes 11 entspricht.

Die Querschnittsverjüngung 30 erstreckt sich entlang des Umfangs des Durchbruches 29 bevorzugt durchgehend und ununterbrochen.

Die Querschnittsverjüngung 30 kann durch Verdichtung dieses Bereichs hergestellt werden, insbesondere wenn der Reibring 11 aus zumindest einem Harz, in dem zumindest ein Zusatzstoff enthalten ist, oder einem Sinterwerkstoff hergestellt ist, wodurch der Reibring 11 wiederum einstückig ausgebildet werden kann. Zusätzlich ist damit eine mechanische Verbesserung der Belastbarkeit des Reibringes 11 im Bereich der Innenführung durch diesen verdichteten Bereich 20 im Sinne der voranstehenden Ausführungen zu den Figuren 1 bis 8 erzielbar.

Wie voranstehen ausgeführt, ist es aber auch möglich, dass der Reibring 11 aus dem Trägerring 27 mit darauf angeordneten Reibsegmenten 28 besteht. In diesem Fall kann vorgesehen werden, dass der Trägerring 27 eine Dicke in axialer Richtung aufweist, die der Gesamtbreite 32 des Reibringes 11 abzüglich der Breite 31 der Querschnittsverjüngung 30 oder, falls der Reibring 11 beidseitig die Querschnittsverjüngungen 30 aufweist, abzüglich der Breiten 31 der beiden Querschnittsverjüngungen 30 entspricht. Der Trägerring 27 weist also im Bereich der Querschnittsverjüngung 30 keine Reibsegmente 28 auf.

Es sei jedoch darauf hingewiesen, dass auch eine Ausführung des Reibringes 11 möglich ist, bei der sich die Reibsegmente 28 bis in den Bereich der Querschnittsverjüngung(en) 30 erstrecken und die Querschnittsverjüngung(en) 30 durch einen verdichteten Bereich 20 der Reibsegmente 28 gebildet werden.

Nach einer anderen Ausführungsvariante der Reibbaugruppe 1 kann vorgesehen sein, dass - wie dies voranstehend ebenfalls beschrieben wurde - zwischen den Innenlamellen 2 und den Außenlamellen 3 (Fig. 1) jeweils drei Reibringe 11 angeordnet sind, wobei die Reibringe 11 miteinander verbunden sind. Der Durchbruch 29 des mittleren Reibringes 11 kann in diesem Fall zur Ausbildung der Querschnittsverjüngung 30 einen kleineren Innendurchmesser aufweisen als die Durchbrüche 29 der beiden äußeren Reibringe 11.

Es sei jedoch darauf hingewiesen, dass es auch bei dieser Ausführung des Reibringes 11 möglich ist, dass sich die beiden äußeren Reibringe 11 bis in den Bereich der Querschnittsverjüngung(en) 30 erstrecken und die Querschnittsverjüngung(en) 30 durch einen verdichteten Bereich 20 beiden äußeren Reibringe 11 gebildet werden. In diesem Fall weisen die beiden äußeren Reibringe 11 vorzugsweise jeweils nur einen verdichteten Bereich 20 auf, der auf der Oberfläche ausgebildet ist, die nicht an dem mittleren Reibring 11 anliegt. Beispielsweise können bei diesen Ausführungen der Reibbaugruppe 1 (Fig. 1) alle Durchbrüche 29 einen gleich großen Innendurchmesser 14 aufweisen.

Weiter ist es bei der Ausführungsvariante der Reibbaugruppe 1 mit mehreren miteinander verbundenen Reibringen 11 möglich, dass mehr als drei Reibringe 11 angeordnet und miteinander verbunden werden. Dabei können die inneren Reibringe 11 zwischen den beiden äußeren Reibringen 11 jeweils einen gleich großen Durchbruch 29 aufweisen. Die Querschnittsverjüngung(en) 30 werden dabei durch die einen oder beide äußere Reibringe 11 gebildet. Andererseits ist es aber auch möglich, dass mehrere Reibringe 11 an zumindest einer Seite (in der axialen Richtung 4 betrachtet) angeordnet sind, die einen kleineren Innendurchmesser 14 der Durchbrüche 29 aufweisen, als der oder die mittlere(n) Reibring(e) 11.

Nach einer Weiterbildung der Ausführungsvariante des Reibringes 11 nach Fig. 9 kann vorgesehen sein, dass zumindest ein Übergang zwischen zwei verschiedenen Querschnitten des Reibringes 11 im Bereich der Querschnittsverjüngung 30 zumindest mit einer Rundung 35 und/oder 36 versehen ist, wie dies aus Fig. 10 ersichtlich ist.

Ein Rundungsradius der Rundung 35 und/oder ein Rundungsradius der Rundung 36 kann dabei ausgewählt sein aus einem Bereich mit einer unteren Grenze von 0,1 mm und einer oberen Grenze von 1,2 mm

Im Übrigen sei auf die Ausführungen zum Reibring 11 gemäß Fig. 9 bzw. die daran anschließenden Ausführungen betreffend den Trägerring 27 mit den Reibsegmenten 28 oder die mehreren miteinander verbundenen Reibringe 11 verwiesen, die auch auf diese Ausführungsvariante des Reibringes gemäß Fig. 10 angewandt werden können.

Die Reibbaugruppe 1 mit den Reibringen 11 weist zumindest in den meisten Ausführungsvarianten neben den voranstehend genannten Vorteilen u.a. auch die Vorteile auf, dass Reibbeläge nicht gesondert auf einen metallischen Träger aufgeklebt werden müssen. Dadurch können kürzere Produktionszeiten erreicht werden, da die Schritte Beizen, Kleber auftragen, Vorpositionieren des Trägers, entfallen. Es kann damit auch eine Zeitreduktion beim Aushärten erreicht werden. Als Träger werden üblicherweise die Innenlamellen 2 verwendet. Da diese nun (wie die Außenlamellen 3) keine Reibbeläge mehr aufweisen, können die Träger zusätzlich als Wärmesenke verwendet werden, da keine Belagsisolation vorhanden ist. Es ist damit eine höhere Leistungsdichte oder bei gleicher Leistungsdichte wie im Stand der Technik mit aufgeklebten Reibbelägen ein geringerer Bauraum möglich.

Zur Herstellung der Reibringe 11 kann eine entsprechende Rohstoffmischung mit dem Harz auf ein Papier aufgebracht und dieses damit mit dem Harz imprägniert werden, worauf das Harz gehärtet wird. Danach werden die Reibringe 11 ausgestanzt. Die Einbringung der verdichteten Bereiche 20 erfolgt bevorzugt in das gehärtete Harz. Das Aushärten ist ein Heißpressvorgang, bei dem durch Temperatur und Druck im Reibmaterial die restlichen Querverbindungen des Harzes hergestellt werden sowie die Enddicke eingestellt wird. Dabei entsteht ein Materialfluss, d.h. der Außendurchmesser wird größer, der Innendurchmesser wird kleiner. Die Härtung vor dem Ausstanzen hat daher den Vorteil, dass das die Größe der Reibringe 11 durch nachfolgende Prozessschritte nicht mehr verändert wird. Dies wiederum hat den Vorteil, dass sowohl die Festigkeit als auch die Kompressibilität des Reibringes 11 über die verdichteten Bereiche 20 und die nicht verdichteten bzw. geringer verdichteten Bereiche 21 besser eingestellt werden können.

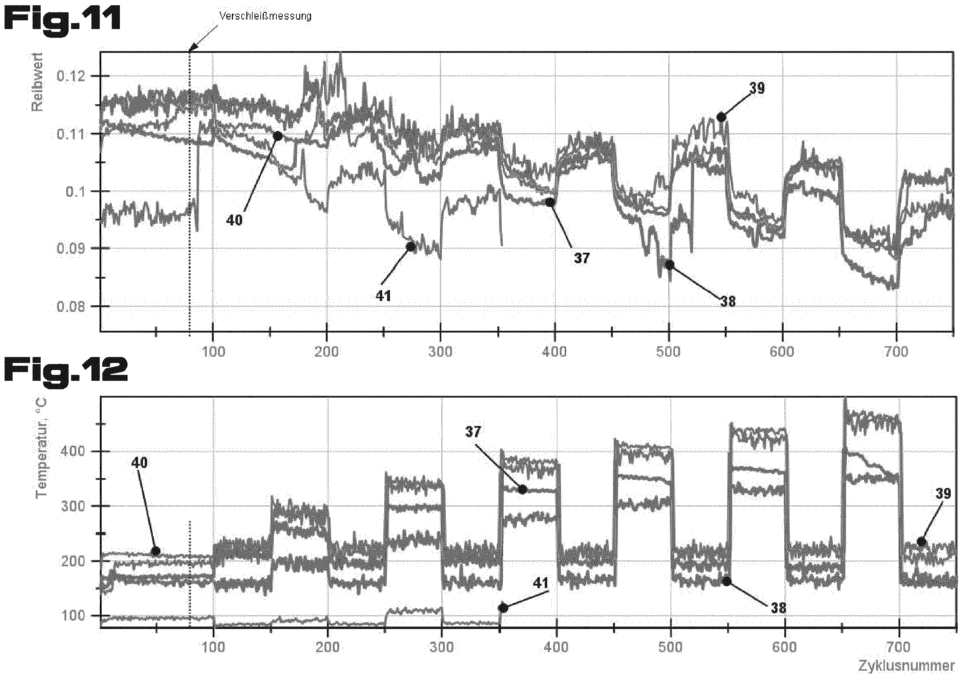

Im Zuge der Erfindung wurden Reibbaugruppen 1 hinsichtlich des Reibverhaltens, des Temperaturverhaltens und der auftretenden Schleppmomente der Reibringe 11 getestet. Die Ergebnisse sind in den Fig. 11 bis 13 dargestellt.

Die Prüfung wurde anhand einer Reibbaugruppe 1 durchgeführt, die sechs Reibringe 11, vier Außenlamellen 3 und drei Innenlamellen 2 aufwies. Die Reibringe 11 der Reibbaugruppe 1 nach der Erfindung und die Reibringe der Reibbaugruppen nach dem Stand der Technik bestanden jeweils aus dem gleichen Werkstoff, ebenso die jeweiligen Gegenlamellen in den Reibbaugruppen. Die Reibfläche dieser Reibbaugruppen betrug 6.268,44 mm². Der Radius der Reibringe 11 betrug 58,72 mm.

In den Fig. 11 bis 13 ist mit dem Bezugszeichen 37 eine Referenzreibring 11 bezeichnet.

Bezugszeichen 38 bezeichnet einen Reibring 11 mit Außenführung, also der Führung des Reibringes 11 im Bereich des zweien Bauteils 8.

Bezugszeichen 39 bezeichnet einen Reibring 11 mit Innenführung, also der Führung des Reibringes 11 im Bereich des ersten Bauteils 5. Der Reibring 11 ist dabei mittels einem lockeren Sitz geführt.

Bezugszeichen 40 bezeichnet einen Reibring 11 mit fester Innenführung Der Reibring 11 ist wie der Reibring 11 mit dem lockeren Sitz ausgebildet.

Bezugszeichen 41 bezeichnet eine Innenlamelle 2 aus Stahl.

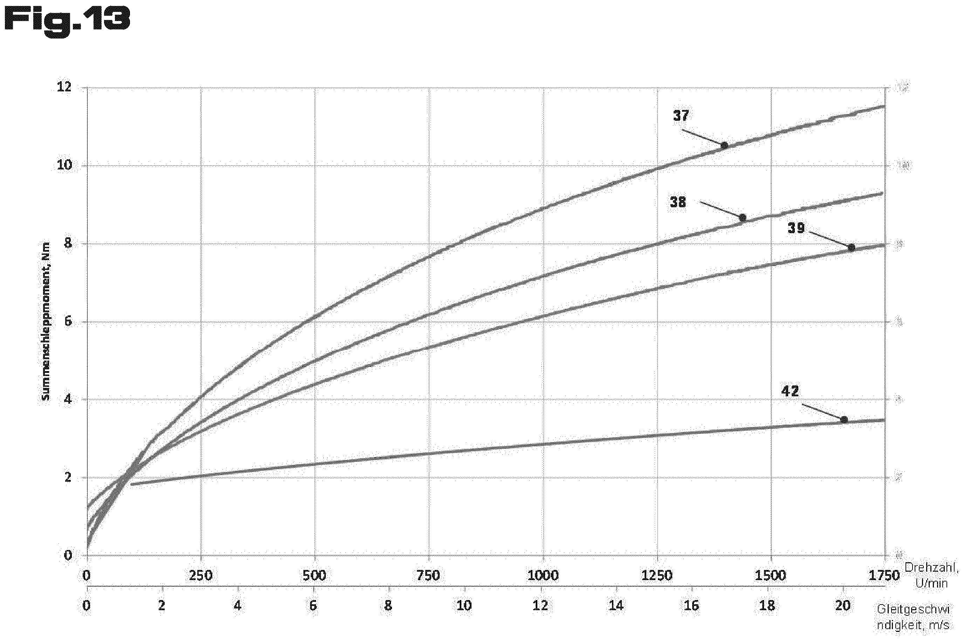

In Fig. 13 ist mit Bezugszeichen 42 die Messung ohne Reibringe 11 bezeichnet.

Weiter ist in den Fig. 11 und 12 auf der Abszisse die Zykluszahl aufgetragen. Auf der Ordinate sind in Fig. 11 der Reibwert und in Fig. 12 die Temperatur in °C aufgetragen.

In Fig. 13 sind auf der Ordinate in der oberen Zahlenreihe die Drehzahl in U/min und in der unteren Zahlreihe die Gleitgeschwindigkeit in m/s aufgetragen. Auf der Abszisse ist das Summenschleppmoment in Nm aufgetragen.

Wie aus Fig. 11 ersichtlich ist, weist der Reibring 11 mit der lockeren Innenführung (Bezugszeichen 39) zumindest bis ca. 700 Zyklen im Vergleich zu den anderen Reibringen (Bezugszeichen 37, 38, 40) und der Innenlamelle (Bezugszeichen 41) einen zum Teil deutlich besseren Reibwert auf.

In Hinblick auf das Temperaturverhalten über die Anzahl der Zyklen kann festgestellt werden, dass die Reibring 11 mit der Innenführung (Bezugszeichen 39 und 40) schlechter abschnitten, als der Reibring mit der Außenführung (Bezugszeichen 38) und der Referenzreibring (Bezugszeichen 37). Dem kann jedoch mit einer besseren Kühlung, insbesondere im Bereich der Innenführung über die Querschnittsverjüngung 30, begegnet werden.

Dafür schnitt der Reibring 11 mit der lockeren Innenführung (Bezugszeichen 39) hinsichtlich des Schleppmomentes deutlich besser ab, als der Reibring mit der Außenführung (Bezugszeichen 38) bzw. der Referenzreibring (Bezugszeichen 37). Normiert auf die Messung ohne Reibringe (Bezugszeichen 42) konnte eine Einsparung von bis zu maximal 44 % mit dem innengeführten Reibringen 11 erreicht werden. Die Einsparung errechnet sich dabei nach der Formel 1-M_{Reibring}/M_{Referenz} = 1 - (11,5-3,5)/8-3,5).

Die Ausführungsbeispiele zeigen mögliche Ausführungsvarianten der Reibbaugruppe 1 bzw. des Reibringes 11, wobei an dieser Stelle bemerkt sei, dass auch diverse Kombinationen der einzelnen Ausführungsvarianten untereinander möglich sind.

Weiter umfasst die Erfindung eine Reibbaugruppe umfassend mehrere Innenlamellen und mehrere Außenlamellen, wobei die Innenlamellen und die Außenlamellen in einer axialen Richtung abwechselnd angeordnet sind, und wobei zwischen den Innenlamellen und den Außenlamellen frei drehbare Reibringe angeordnet sind, und wobei die Innenlamellen und/oder die Außenlamellen relativ zueinander zur Ausbildung eines Reibschlusses mit den Reibringen in der axialen Richtung verstellbar sind, wobei die Reibringe aus zumindest einem Harz, in dem zumindest ein Zusatzstoff enthalten ist, oder einem Sinterwerkstoff hergestellt sind, wobei die Reibringe auf einer, einer Innenlamelle zugewandten Oberfläche und auf einer, einer Außenlamelle zugewandten Oberfläche jeweils zumindest einen verdichteten Bereich und zumindest einen nicht verdichteten und/oder zumindest einen in Bezug auf den verdichteten Bereich geringer verdichteten Bereich aufweisen.

Von Vorteil ist dabei, dass über den zumindest einen verdichteten Bereich der Reibring eine höhere mechanische Festigkeit erhält. Dieser Vorteil überwiegt dabei den damit verbundenen Nachteil, dass die für den Reibschluss hauptsächlich zur Verfügung stehende Fläche des Reibringes, d.h. jener zumindest eine Bereich, der nicht verdichtet oder geringer verdichtet ist, reduziert wird. Als positiver Nebeneffekt wird damit allerdings erreicht, dass die Kompressibilität des Reibringes besser eingestellt werden kann, wodurch das Reibverhalten des Reibringes an sich besser an die jeweilige Gegenlamelle angepasst werden kann. Durch die verbesserte mechanische Stabilität kann ein einstückiger Reibring ohne Träger eingesetzt werden, wobei der Träger eine hohe Standzeit aufweist. Von Vorteil ist dabei weiter, dass der Reibring mit einer relativ hohen Festigkeit aus nur einem Material hergestellt werden kann, wodurch die Herstellung des Reibringes entsprechend einfacher erfolgen kann, da das Herstellungsverfahren weniger Schritte umfasst. Durch die Verwendung von nur einem Material kann die Homogenität des Reibringes über sein gesamtes Volumen, d.h. die homogene Verteilung der einzelnen Bestandteile des Materials, verbessert werden. Dies wiederum hat positive Auswirkungen auf das Reibverhalten des Reibringes. Durch die Verwendung von nur einem Material besteht zudem nicht die Gefahr, dass bei aufgebrauchter Reibfläche die Gegenlamelle mit einem metallischen Träger zur Reibung gelangt, was wiederum zur Beschädigung der Gegenlamelle führen würde.

Gemäß einer Ausführungsvariante der Reibbaugruppe kann vorgesehen sein, dass zumindest einzelne der verdichteten Bereiche jeweils geringer verdichtete Bereiche oder nicht verdichtete Bereiche ringförmig umgeben. Es ist damit möglich, die Bereiche höherer Festigkeit über die Oberfläche des Reibringes besser zu verteilen, bzw. ist es umgekehrt möglich, die höher kompressierbaren Bereiche flächenmäßig zu begrenzen. Dadurch kann eine bessere Trennung der Reibflächen beim Übergang in den geöffneten Zustand der Reibbaugruppe erreicht werden. Zudem kann damit die mechanische Stabilität der nicht verdichteten bzw. geringer verdichteten Bereiche verbessert werden.

Bevorzugt sind die verdichteten Bereiche nutförmig ausgebildet. Dies hat den Vorteil, dass die verdichteten Bereiche zusätzlich zur Schmiermittelführung verwendet werden können, wodurch der Reibring besser gekühlt werden kann. Damit kann in weiterer Folge der Anteil an nicht verdichteten bzw. geringer verdichteten Bereichen an der Oberfläche des Reibringes erhöht werden, wodurch die Effizienz des Reibringes bzw. der Reibbaugruppe verbessert werden kann.

Es kann vorgesehen werden, dass zumindest die nicht verdichteten oder geringer verdichteten Bereiche eine Porosität aufweisen, die mindestens 20 % und maximal 80 % beträgt, bezogen auf die Volldichte des Materials des Reibringes. Die nicht verdichteten bzw. geringer verdichteten Bereiche können damit eine höhere Kompressibilität aufweisen. Dies wiederum kann dazu verwendet werden, um den Anteil der verdichteten Bereiche an der Gesamtoberfläche des Reibringes zu Erhöhen, wodurch die mechanische Stabilität des Reibringes verbessert werden kann.

Gemäß einer Ausführungsvariante der Reibbaugruppe kann vorgesehen sein, dass der zumindest eine verdichtete Bereich auf der der Außenlamelle zugewandten Oberfläche in Umfangsrichtung des Reibringes versetzt zum zumindest einen verdichteten Bereich auf der der Innenlamelle zugewandten Oberfläche ausgebildet ist. Es kann damit die Kompressibilität des Reibringes auf ein gewünschtes Ausmaß besser eingestellt werden. Andererseits kann damit aber auch erreicht werden, dass der verdichtete Bereich einer Oberfläche den nicht bzw. geringer verdichteten Bereich auf der gegenüberliegenden Oberfläche des Reibringes bessert unterstützt, wodurch die Belastbarkeit des Reibringes verbessert werden kann.

Zusätzlich zur Verbesserung der (mechanischen) Stabilität der Reibringes über die verdichteten Bereiche kann zur Verbesserung der Stabilität des Reibringes vorgesehen sein, dass der zumindest eine Zusatzstoff oder zumindest einer der Zusatzstoffe durch Fasern gebildet ist, wobei zumindest 50 % der Fasern, bezogen auf den Gesamtanteil der Fasern im Reibring, zumindest annähernd gleich orientiert sind.

Nach einer Ausführungsvariante der Reibbaugruppe kann vorgesehen sein, dass der zumindest eine Zusatzstoff oder zumindest einer der Zusatzstoffe durch ein drahtförmiges Verstärkungselement gebildet ist, das im Bereich einer radial äußeren Stirnfläche und/oder im Bereich einer radial inneren Stirnfläche des Reibringes angeordnet ist. Es kann damit die Stabilität des Reibringes weiter verbessert werden, wodurch der Anteil der verdichteten Bereiche im Bezug auf den Anteil der nicht verdichteten oder geringer verdichteten Bereiche reduziert werden kann. Dadurch kann in weiterer Folge einerseits auf das Reibverhalten des Reibringes Einfluss genommen werden, andererseits kann damit aufgrund des höheren Anteils an nicht bzw. geringer verdichteten Bereichen an der Oberfläche des Reibringes auch die Kompressibilität des Reibringes in weiteren Grenzen eingestellt werden.

Zur Reduzierung von Schleppmomenten kann der Reibring wellenförmig ausgebildet sein. Es ist damit möglich, den Anteil an verdichteten Bereichen, bezogen auf den Anteil an nicht verdichteten bzw. geringer verdichteten Bereichen, zu reduzieren, sodass die Effizienz des Reibringes verbessert werden kann.

Vorzugsweise weist der Reibring eine Dicke in der axialen Richtung auf, die ausgewählt ist aus einem Bereich von 0,25 mm bis 1,75 mm. Wenn der Reibring dicker als 1,75 mm ausgeführt wird, wird zwar die mechanische Stabilität des Reibringes an sich verbessert werden, allerdings wurde beobachtet, dass ein zu dicker Belag zu Taumelbewegungen des Reibringes führen kann. Diese Taumelbewegung kann im geöffneten Zustand der Reibbaugruppe zum Berühren des Reibringes mit der Oberfläche der Gegenlamelle führen, wodurch die Standzeit des Reibringes deutlich verringert wird. Durch das Vorsehen von verdichteten Bereichen zur Erhöhung der mechanischen Stabilität des Reibringes kann die Dicke des Reibringes reduziert werden, um diese Problematik zu verhindern. Ein Reibring, der eine Dicke von weniger als 0,25 mm aufweist, neigt im Betrieb zum Flattern, wodurch die Standzeit des Reibringes ebenfalls reduziert wird.

Bevorzugt weisen die nicht verdichteten oder geringer verdichteten Bereiche jeweils eine Fläche von maximal 2 cm² auf. Einerseits wird damit der Anteil an den verdichteten Bereichen an der Gesamtfläche des Reibringes erhöht, wodurch die mechanische Stabilität verbessert werden kann. Andererseits kann auch erreicht werden, dass die Trennung von Reibring und Gegenlamelle besser erfolgt, da die Summe der Flächen, die den Reibschluss mit den Gegenlamellen des Reibpaketes ausbilden, geringer wird und damit die Haftreibung ebenfalls geringer wird, wodurch die Problematik, dass der Reibring an den Oberflächen der Gegenlamelle "kleben bleibt", verbessert werden kann. Als positiver Nebeneffekt kann damit auch erreicht werden, dass aufgrund des höheren Anteils an verdichteten Bereichen am Reibring, die Kühlung des Reibringes verbessert werden kann, wenn die verdichteten Bereiche als Nuten ausgebildet sind.

Die voranstehend genannten Vorteile der Stabilität bei gleichzeitiger Kompressibilität der Reibringe können auch dadurch erreicht werden, dass gemäß einer Ausführungsvariante die Reibringe aus einem Trägerring und darauf angeordneten Reibsegmenten gebildet sind, wobei der Trägerring aus einem Papier gebildet ist. Es kann dabei der Trägerring eine höhere Verdichtung als die Reibsegmente aufweisen. Zusätzlich kann mit dieser Ausführungsvariante eine Kostenreduktion des Reibringes erreicht werden, indem nämlich die teureren Reibsegmente nicht einstückig hergestellt werden müssen, wodurch der Anteil an Verschnitt, wie er bei einstückigen Reibringen zwangsweise anfällt, reduziert werden kann. Die Reibringe bestehen also aus einer tragenden Struktur, nämlich dem Trägerring, und einer reibenden Struktur, nämlich den Reibsegmenten.

Der Ordnung halber sei abschließend darauf hingewiesen, dass zum besseren Verständnis des Aufbaus der Reibbaugruppe 1 bzw. des Reibringes 11 diese bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Reibbaugruppe | 31 | Breite |
| 2 | Innenlamelle | 32 | Gesamtbreite |
| 3 | Außenlamelle | 33 | Höhe |
| 4 | Richtung | 34 | Gesamthöhe |
| 5 | Bauteil | 35 | Rundung |
| 6 | Innenverzahnung | 36 | Rundung |
| 7 | Außenverzahnung | 37 | Referenzreibring |
| 8 | Bauteil | 38 | Reibring mit Außenführung |
| 9 | Außenverzahnung | 39 | Reibring mit Innenführung |
| 10 | Innenverzahnung | 40 | Reibring mit Innenführung |
| 11 | Reibring | 41 | Innenlamelle |
| 12 | Außendurchmesser | 42 | Messung ohne Reibringe |
| 13 | Stirnfläche | | |
| 14 | Innendurchmesser | | |
| 15 | Stirnfläche | | |
| 16 | Oberfläche | | |
| 17 | Oberfläche | | |
| 18 | Oberfläche | | |
| 19 | Oberfläche | | |
| 20 | Bereich | | |
| 21 | Bereich | | |
| 22 | Nut | | |
| 23 | Faser | | |
| 24 | Verstärkungselement | | |
| 25 | Tiefe | | |
| 26 | Dicke | | |
| 27 | Trägerring | | |
| 28 | Reib segment | | |
| 29 | Durchbruch | | |
| 30 | Querschnittsverjüngung | | |

## Patentansprüche

1. Reibbaugruppe (1) umfassend einen ersten Bauteil (5) und einen zweiten Bauteil (8) sowie mehrere Innenlamellen (2) und mehrere Außenlamellen (3), wobei die Innenlamellen (2) an dem ersten Bauteil (5) und die Außenlamellen (3) an dem zweiten Bauteil (8) angeordnet sind und die Innenlamellen (2) und die Außenlamellen (3) in einer axialen Richtung (4) abwechselnd angeordnet sind, und wobei zwischen den Innenlamellen (2) und den Außenlamellen (3) jeweils zumindest ein frei drehbarer Reibring (11) angeordnet ist, der einen Durchbruch (29) mit einem Innendurchmesser (14) aufweist, und wobei die Innenlamellen (2) und/oder die Außenlamellen (3) relativ zueinander zur Ausbildung eines Reibschlusses mit den Reibringen (11) in der axialen Richtung (4) verstellbar sind, wobei weiter die frei drehenden Reibringe (11) im Bereich des Innendurchmessers (14) an dem ersten Bauteil (5) geführt sind, wozu die Reibringe (11) einen Außendurchmesser (12) aufweisen, der kleiner ist, als ein Innendurchmesser des zweiten Bauteils (8) im Bereich einer radial äußeren Stirnfläche (13) der Reibringe (11), **dadurch gekennzeichnet, dass** die Reibringe (11) kreisringförmig und scheibenförmig ausgebildet sind und dass die der Außenlamelle (3) zugewandte Oberfläche (18) und die der Innenlamelle (2) zugewandte Oberfläche (19) der Reibringe (11) einen arithmetischen Mittenrauwert Ra nach DIN EN ISO 4287:1998 von maximal 12,5 µm aufweisen.

2. Reibbaugruppe (1) nach Anspruch 1, **dadurch gekennzeichnet, dass** die Reibringe (11) in einem Abstand zu einer Oberfläche des ersten Bauteils angeordnet sind, wobei dieser Abstand mindestens 0,05 mm und maximal 3 mm beträgt.

3. Reibbaugruppe (1) nach Anspruch 1 oder 2, **dadurch gekennzeichnet, dass** die Reibringe (11) im Bereich des Durchbruches (29) eine Querschnitts Verjüngung (30) aufweisen.

4. Reibbaugruppe (1) nach Anspruch 3, **dadurch gekennzeichnet, dass** ein Übergang zwischen zwei verschiedenen Querschnitten in Bereich der Querschnittsverjüngung (30) zumindest mit einer Rundung (35,36) versehen ist.

5. Reibbaugruppe (1) nach einem der Ansprüche 3 oder 4, **dadurch gekennzeichnet, dass** die Reibringe (11) aus zumindest einem Harz, in dem zumindest ein Zusatzstoff enthalten ist, oder einem Sinterwerkstoff hergestellt sind, und dass die die Querschnittsverjüngung (30) durch einen verdichteten Bereich (20) gebildet ist.

6. Reibbaugruppe (1) nach einem der Ansprüche 1 bis 5, **dadurch gekennzeichnet, dass** ein Verhältnis von einem Außendurchmesser (12) des Reibringes zum Innendurchmesser (14) des Reibringes (11) mindestens 1,2 beträgt.

7. Reibbaugruppe (1) nach einem der Ansprüche 3 bis 6, **dadurch gekennzeichnet, dass** die Reibringe (11) aus einem Trägerring (27) und darauf angeordneten Reibsegmenten (28) gebildet sind, wobei der Trägerring (27) eine Dicke in axialer Richtung aufweist, die der Dicke der Querschnittsverjüngung (30) in gleicher Richtung entspricht.

8. Reibbaugruppe (1) nach einem der Ansprüche 1 bis 6, **dadurch gekennzeichnet, dass** zwischen den Innenlamellen (2) und den Außenlamellen (3) jeweils zumindest zwei Reibringe (11) angeordnet sind, wobei die Reibringe (11) miteinander verbunden sind.

9. Reibbaugruppe (1) nach Anspruch 8, **dadurch gekennzeichnet, dass** drei miteinander verbundene Reibringe (11) zwischen den Innenlamellen (2) und den Außenlamellen (3) angeordnet sind, wobei der Durchbruch (29) des mittleren Reibringes (11) zur Ausbildung der Querschnittsverjüngung (30) einen kleineren Innendurchmesser (14) aufweist als die Durchbrüche (29) der beiden äußeren Reibringe (11).

## Claims

1. A friction group (1) comprising a first component (5) and a second component (8), as well as a plurality of inner discs (2) and a plurality of outer discs (3), wherein the inner discs (2) are arranged on the first component (5) and the outer disc (3) are arranged on the second component (8) and the inner discs (2) and the outer discs (3) are arranged alternately in an axial direction (4), and wherein between the inner discs (2) and the outer discs (3), respectively, at least one freely rotational friction ring (11) is arranged which comprises an opening (29) with an inner diameter (14), and wherein the inner discs (2) and/or the outer discs (3) can be adjusted relative to one another to form a friction connection with the friction rings (11) in the axial direction (4), wherein the freely rotating friction rings (11) are further guided in the region of the inner diameter (14) on the first component (5), for which purpose the friction rings (11) have an outer diameter (12) which is smaller than an inner diameter of the second component (8) in the region of a radially outer end face (13) of the friction rings (11), **characterized in that** the friction rings (11) are annular and disc-shaped and that the surface (18) facing the outer disc (3) and the surface (19) of the friction rings (11) facing the inner disc (2) have an arithmetic mean deviation of the roughness profile Ra according to DIN EN ISO 4287:1998 of maximum 12.5 µm.

2. The friction group (1) according to claim 1, **characterized in that** the friction rings (11) are arranged at a distance from a surface of the first component, wherein said distance is at least 0.05 mm and a maximum of 3 mm.

3. The friction group (1) according to claim 1 or 2, **characterized in that** the friction rings (11) in the region of the opening (29) have a cross-sectional tapering (30).

4. The friction group (1) according to claim 3, **characterized in that** a transition between two different cross-sections in the region of the cross-sectional tapering (30) is provided with at least one rounding (35, 36).

5. The friction group (1) according to any one of claims 3 or 4, **characterized in that** the friction rings (11) are made from at least one resin, containing at least one additive, or a sintered material, and that the cross-sectional tapering (30) is formed by a compacted area (20).

6. The friction group (1) according to any one of claims 1 to 5, **characterized in that** a ratio of an outer diameter (12) of the friction ring to the inner diameter (14) of the friction ring (11) is at least 1.2.

7. The friction group (1) according to any one of claims 3 to 6, **characterized in that** the friction rings (11) are formed by a support ring (27) and friction segments (28) arranged thereon, wherein the support ring (27) has a thickness in an axial direction which corresponds to the thickness of the cross-sectional tapering (30) in the same direction.

8. The friction group (1) according to any one of claims 1 to 6, **characterized in that** between the inner discs (2) and the outer discs (3) at least two friction rings (11) are arranged, wherein the friction rings (11) are connected to one another.

9. The friction group (1) according to claim 8, **characterized in that** three friction rings (11) connected to one another are arranged between the inner discs (2) and the outer discs (3), wherein the opening (29) of the middle friction ring (11) to form the cross-sectional tapering (30) has a smaller inner diameter (14) than the openings (29) of the two outer friction rings (11).

## Revendications

1. Sous-ensemble à friction (1) comprenant un premier composant (5) et un deuxième composant (8) ainsi que plusieurs lamelles internes (2) et plusieurs lamelles externes (3), les lamelles internes (2) étant disposées sur le premier composant (5) et les lamelles externes (3) étant disposées sur le deuxième composant (8) et les lamelles internes (2) et les lamelles externes (3) étant disposées alternativement dans une direction axiale (4) et au moins une bague de friction (11) librement rotative étant disposée entre les lamelles internes (2) et les lamelles externes (3), qui comprend un passage (29) avec un diamètre intérieur (14) et les lamelles internes (2) et/ou les lamelles externes (3) étant mobiles les unes par rapport aux autres pour la formation d'une liaison par friction avec les bagues de friction (11) dans la direction axiale (4), les bagues de friction (11) librement rotatives étant guidées au niveau du diamètre intérieur (14) sur le premier composant (5), les bagues de friction (11) présentant pour cela un diamètre extérieur (12) qui est inférieur à un diamètre intérieur du deuxième composant (8) au niveau d'une face frontale externe radiale (13) des bagues de friction (11), **caractérisé en ce que** les bagues de friction (11) présentent une la firme d'un anneau circulaire et d'un disque et **en ce que** la surface (18), orientée vers la lamelle externe (3), et la surface (19), orientée vers la lamelle interne (2), des bagues de friction (11) présentant une valeur de rugosité arithmétique moyenne Ra selon DIN EN ISO 4287:1998 de 12,5 µm maximum.

2. Sous-ensemble à friction (1) selon la revendication 1, **caractérisé en ce que** les bagues de friction (11) sont disposées à une certaine distance par rapport à une surface du premier composant, cette distance étant d'au moins 0,05 mm et de 3 mm maximum.

3. Sous-ensemble à friction (1) selon la revendication 1 ou 2, **caractérisé en ce que** les bagues de friction (11) comprennent, au niveau du passage (29), un rétrécissement de section (30).

4. Sous-ensemble à friction (1) selon la revendication 3, **caractérisé en ce qu'**une transition entre deux sections différentes est munie, au niveau du rétrécissement de section (30), d'au moins un arrondi (35, 36).

5. Sous-ensemble à friction (1) selon l'une des revendications 3 ou 4, **caractérisé en ce que** les bagues de friction (11) sont constituées d'au moins une résine dans lequel est contenu au moins un additif, ou d'un matériau fritté, et **en ce que** le rétrécissement de section (30) est constitué d'une zone compactée (20).

6. Sous-ensemble à friction (1) selon l'une des revendications 1 à 5, **caractérisé en ce qu'**un rapport entre un diamètre extérieur (12) de la bague de friction et le diamètre intérieur (14) de la bague de friction (11) est d'au moins 1,2.

7. Sous-ensemble à friction (1) selon l'une des revendications 3 à 6, **caractérisé en ce que** les bagues de friction (11) sont constituées d'une bague de support (27) et de segments annulaires (28) disposés sur celle-ci, la bague de support (27) présentant une épaisseur dans la direction axiale, qui correspond à l'épaisseur du rétrécissement de section (30) dans la même direction.

8. Sous-ensemble à friction (1) selon l'une des revendications 1 à 6, **caractérisé en ce que**, entre les lamelles internes (2) et les lamelles externes (3) se trouvent au moins deux bagues de friction (11), les bagues de friction (11) étant reliées entre elles.

9. Sous-ensemble à friction (1) selon la revendication 8, **caractérisé en ce que** trois bagues de friction (11) reliées entre elles sont disposées entre les lamelles internes (2) et les lamelles externes (3), le passage (29) de la bague de friction centrale (11) présentant, pour la formation du rétrécissement de section (30), un diamètre intérieur (14) inférieur à ceux des passages (29) des deux bagues de friction externes (11).
